# EUROPEAN PATENT APPLICATION

(11) **EP 4 572 528 A1**
(43) Date of publication of application: **18.06.2025**
(21) Application number: 22954478.8
(22) Date of filing: 11.08.2022
(51) Int. Cl.: H04W 88/00

(54) **FORWARDER AND TRANSMISSION METHOD THEREOF, NETWORK DEVICE, AND COMMUNICATION SYSTEM**

(71) Applicant: FUJITSU LIMITED, Kawasaki-shi, Kanagawa 211-8588 (JP)
(72) Inventor: TIAN, Yan, Beijing 100022 (CN); JIANG, Qinyan, Beijing 100022 (CN); ZHANG, Lei, Beijing 100022 (CN)
(74) Representative: Haseltine Lake Kempner LLP
(86) International application number: PCT/CN2022/111683
(87) International publication number: WO 2024/031509

(57) **Abstract**

Embodiments of the present application provide a repeater and a transmission method thereof, a network device and a communication system. The method includes: the repeater receives control information from a network device via a control link, wherein the repeater supports uplink and downlink transmission of cyclic prefix orthogonal frequency division multiplexing (CP-OFDM) waveforms; and the repeater performs forwarding at a backhaul link and/or an access link according to the control information.

## Description

### Technical Field

The present application relates to the field of communication technology.

### Background

Compared with traditional 3G (3rd generation mobile communication technology) and 4G (4th generation mobile communication technology) systems, 5G (5th generation mobile communication technology) systems may provide greater bandwidth and higher data rates, and may support more types of terminals and vertical services. For this reason, 5G systems are typically deployed significantly more frequently than 3G and 4G systems. For example, 5G systems may be deployed in the millimeter wave band.

However, the higher the carrying frequency is, the more severe the fading that the signal encounters during transmission is. Therefore, in the actual deployment of 5G systems, especially in the millimeter band, how to better enhance cell coverage has become an urgent problem to be solved.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the backgroud of the present application.

### Summary

In order to better solve the coverage problem of cellular mobile communication systems in actual deployment, an RF Relay/Repeater is used to amplify and forward a communication signal between a terminal equipment and a network device, and this is a common deployment method. The RF repeater has relatively broad application in the actual deployment of 3G systems and 4G systems. Generally speaking, an RF repeater is a device that amplifies and forwards back-and-forth signals between the network device and the terminal equipment in the RF domain.

The inventor has found that for the coverage problem encountered in the deployment of 5G systems, use of the RF repeater for coverage enhancement is one of the feasible solutions. However, the traditional repeater does not have the ability to communicate with the network device. Therefore, such repeater configured in the 5G system may help to enhance signal strength, but it is not flexible enough to cope with complex environmental changes, and thus is not capable of achieving the same effect as deploying the same RF repeater in 3G and 4G systems.

To address at least one of the above problems, provided in the embodiments of the present application are a repeater and a transmission method thereof, a network device and a communication system. The repeater has the ability to communicate with the network device, may better enhance signal coverage under network configuration and cope with environmental changes, thus improving the transmission efficiency of the entire network.

According to an aspect of embodiments of the present application, there is provided with a transmission method of a repeater, including:
the repeater receives control information from a network device via a control link, wherein the repeater supports uplink and downlink transmission of cyclic prefix orthogonal frequency division multiplexing (CP-OFDM) waveforms; and
the repeater performs forwarding at a backhaul link and/or an access link according to the control information.

According to another aspect of the embodiments of the present application, there is provided with a repeater, including:
a communicating portion configured to receive control information from a network device via a control link, wherein the repeater supports uplink and downlink transmission of cyclic prefix orthogonal frequency division multiplexing (CP-OFDM) waveforms; and
a forwarding portion configured to perform forwarding at a backhaul link and/or an access link according to the control information.

According to another aspect of embodiments of the present application, there is provided with a control method of a repeater, including:
a network device transmits control information to a repeater via a control link, wherein the repeater supports uplink and downlink transmission of cyclic prefix orthogonal frequency division multiplexing (CP-OFDM) waveforms; and
the network device receives or transmits a forwarded signal on a backhaul link.

According to another aspect of the embodiments of the present application, there is provided with a network device, including:
a communicating portion configured to transmit control information to a repeater via a control link, wherein the repeater supports uplink and downlink transmission of cyclic prefix orthogonal frequency division multiplexing (CP-OFDM) waveforms; and
a transceiving portion configured to receive or transmit a forwarded signal on a backhaul link.

According to another aspect of the embodiments of the present application, there is provided with a communication system, including:
a network device configured to transmit control information to a repeater via a control link; and
a repeater configured to receive the control information from the network device, wherein the repeater supports uplink and downlink transmission of cyclic prefix orthogonal frequency division multiplexing waveforms, and performs forwarding at a backhaul link and/or an access link according to the control information.

One of the beneficial effects of the embodiments of the present application is in: the repeater receives control information from a network device via a control link, wherein the repeater supports uplink and downlink transmission of cyclic prefix orthogonal frequency division multiplexing (CP-OFDM) waveforms, therefore, the network device may configure the forwarding of the repeater according to the condition of the network, may better strengthen the signal coverage and cope with the changes of the environment and the main business in the cell, so as to improve the transmission efficiency of the whole network.

With reference to the specification and drawings below, specific embodiments of the present application are disclosed in detail, which specify the manner in which the principle of the present application may be adopted. It should be understood that, the scope of the embodiments of the present application is not limited. Within the scope of the clause of the appended claims, the embodiments of the present application include many variations, modifications and equivalents.

The features described and/or shown for one embodiment may be used in one or more other embodiments in the same or similar manner, may be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

The included drawings are used for providing further understanding on the embodiments of the present application, constitute a portion of the Description, are used for illustrating the embodiments of the present application and explain the principle of the present application together with the literary description. Obviously, the drawings described below are merely some examples of the present application, persons ordinarily skilled in the art may also obtain other drawings according to these drawings without making creative efforts. In the drawings:
FIG. 1 is a schematic diagram of the application scenario of the embodiments of the present application;
FIG. 2 is a schematic diagram of NCR of the embodiments of the present application;
FIG. 3 is a schematic diagram of a transmission method of a repeater of the embodiments of the present application;
FIG. 4 is a schematic diagram of a repeater in the embodiments of the present application;
FIG. 5 is a schematic diagram of a control method of a repeater of the embodiments of the present application;
FIG. 6 is a schematic diagram of a network device in the embodiments of the present application; and
FIG. 7 is a schematic diagram of an electronic device in the embodiments of the present application.

### Detailed Description

With reference to the drawings, the foregoing and other features of the present application will become apparent through the following specification. The Description and drawings specifically disclose the particular embodiments of the present application, showing part of the embodiments in which the principle of the present application may be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system may be carried out according to the communication protocol of any stage, for example, including but not being limited to 1G (generation), 2G, 2.5G, 2.75G, 3G, 4G, 4.5G and future 5G, New Radio (NR), etc., and/or other communication protocols currently known or to be developed in the future.

In the embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" may refer to a base station and/or its coverage area, depending on the context in which the term is used.

In the embodiments of the present application, the term "user equipment" (UE) refers, for example, to a device that is connected to the communication network through the network device and receives network services, and may also be referred to as "Terminal Equipment" (TE). The terminal equipment may be fixed or movable, and may also be called a mobile station (MS), a terminal, a user, a subscriber station (SS), an access terminal (AT), a station, etc.

The terminal equipment may include but is not limited to: a cellular phone, a personal digital assistant (PDA), a wireless modem, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

To enhance coverage, an RF repeater is introduced into 3GPP Rel-17 study to forward the transmission between terminal equipment (UE) and a network device (a base station). For the network device and the terminal equipment, the RF repeater introduced in Rel-17 is transparent, that is, the network device and the terminal equipment are unaware of the existence of the RF repeater.

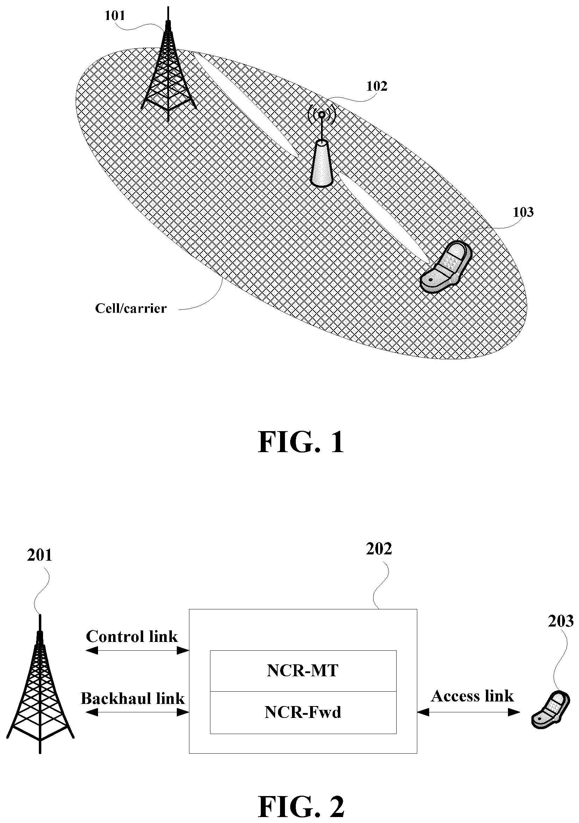

FIG. 1 is a schematic diagram of the application scenario of the embodiments of the present application. As shown in FIG. 1, a network device (e.g., a 5G base station gNB) 101, a repeater 102, and a terminal equipment (e.g., UE) 103 are taken as examples for the sake of illustration, and the present application is not limited to this.

As shown in FIG. 1, the terminal equipment 103 establishes connection to and communicates with the network device 101. In order to increase communication quality, a channel/a signal transmitted between the terminal equipment 103 and the network device 101 is forwarded via the repeater 102. The channel/signal interaction between the network device 101, the terminal equipment 103 and the repeater 102 adopts beam-based receiving and transmitting methods.

As shown in FIG. 1, the network device 101 may have a cell/carrier in which the network device 101, the repeater 102 and the terminal equipment 103 may perform forwarding/communication. However, the present application is not limited to this, for example, the network device 101 may also have other cells/carriers.

In the embodiments of the present application, existing services or services that may be implemented in the future may be transmitted between the network device and the terminal equipment. For example, these services may include, but are not limited to, enhanced mobile broadband (eMBB), large-scale machine-type communications (mMTC), highly reliable low-latency communications (URLLC), and vehicle-to-vehicle (V2X) communications, and etc.

The traditional repeater does not have the ability to communicate with the network device. Therefore, while the traditional repeater may help enhance signal strength, it is not flexible enough to cope with complex environmental changes, which thus reduces the throughput of the overall network. In order to make the forwarding of the repeater more flexible to adapt to the characteristics of the 5G network, the network device needs to assist in the repeater and may configure the forwarding the repeater according to the condition of the network.

In order to enhance the coverage of NR, 3GPP Rel-18 proposes a Network-controlled repeater (NCR) scheme to forward a signal between the network device and the terminal equipment. NCR may communicate directly with the network device through a control link to assist in the forwarding operation of NCR.

FIG. 2 is a schematic diagram of NCR of the embodiments of the present application. As shown in FIG. 2, NCR 202 is configured between the network device 201 and the terminal equipment 203. The NCR 202 may include the following two modules/components: a mobile terminal of a repeater (NCR-MT) and a forwarding module of the repeater (NCR-Fwd); NCR-Fwd may also be called a routing unit of NCR (NCR-RU). The NCR-MT is used to communicate with the network device, and the NCR-Fwd is used to forward signals to and from the network device and the terminal equipment.

As shown in FIG. 2, the NCR of the embodiments of the present application may have three links: a control link (C-link), a backhaul link (BH link) for forwarding, and an access link (AC link). The C-link is used for communication between the NCR and the network device. The BH link is used for the repeater to receive a to-be-forwarded signal from the network device, or to forward a signal from the terminal equipment to the network device. The AC link is used for the repeater to forward a signal from the terminal equipment to the network device, or to receive the to-be-forwarded signal from the terminal equipment.

Therefore, the NCR-MT of the embodiments of the present application communicates directly with the network device through the control link, but there has been not yet a solution for the terminal capability characteristics that the NCR-MT should have to communicate with the network device. In order for the NCR to be able to receive the control information from the network device and to forward the communication between the terminal equipment and the network device according to the control information, and the basic user feature and terminal capability as well as necessary configurations need to be supported by the NCR-MT.

The various embodiments of the present application are illustrated below with reference to the accompanying drawings. These embodiments are exemplary only and are not limitations to the present application.

In the embodiments of the present application, the repeater may communicate with the network device, the repeater may receive a communication channel/signal transmitted by the network device, and demodulate/decode the channel/signal, thereby obtaining the information transmitted by the network device to the repeater, and the signal processing process is hereinafter referred to as "communication". The repeater may also forward the channel/signal transmitted between the network device and the terminal equipment, the repeater does not demodulate/decode the channel/signal, but may perform amplification and other processing, and the signal processing process is called "forwarding". "Communication" and "forwarding" are collectively referred to as "transmission". The above terms are merely for the sake of illustration and do not limit the present application.

For convenience, a channel/signal that communicates directly between the network device and the repeater or between the third device (such as the terminal device) and the repeater is called a communication signal. When transmitting the communication signal, the repeater needs to perform encoding and/or modulation, and when receiving the communication signal, the repeater needs to perform decoding and/or demodulation. In addition, the channel/signal forwarded by the repeater may be referred to as a forwarded signal, and the repeater may perform signal processing such as amplification of the forwarded signal, but may not perform decoding and/or demodulation.

In the embodiments of the present application, the repeater may also be expressed as a repeater, an RF repeater, a relay, and an RF relay; or may also be expressed as a repeater node, a forwarder node, a relay node; or may also be expressed as an intelligent repeater, an intelligent forwarder, an intelligent relay, an intelligent repeater node, an intelligent forwarder node, an intelligent relay node, and etc., but the present application is not limited to this.

In the embodiments of the present application, the network device may be a device in a serving cell of the terminal equipment, and may also be a device in the cell where the repeater resides, and may further be a device in the serving cell of the repeater, and may also be a parent node of the repeater. The name of the repeater is not limited in the present application, and any device that may achieve the above functions shall be included in the scope of the repeater in the present application.

### Embodiments of First Aspect

The embodiments of the present application provide a transmission method of a repeater, illustrated from a side of the repeater.

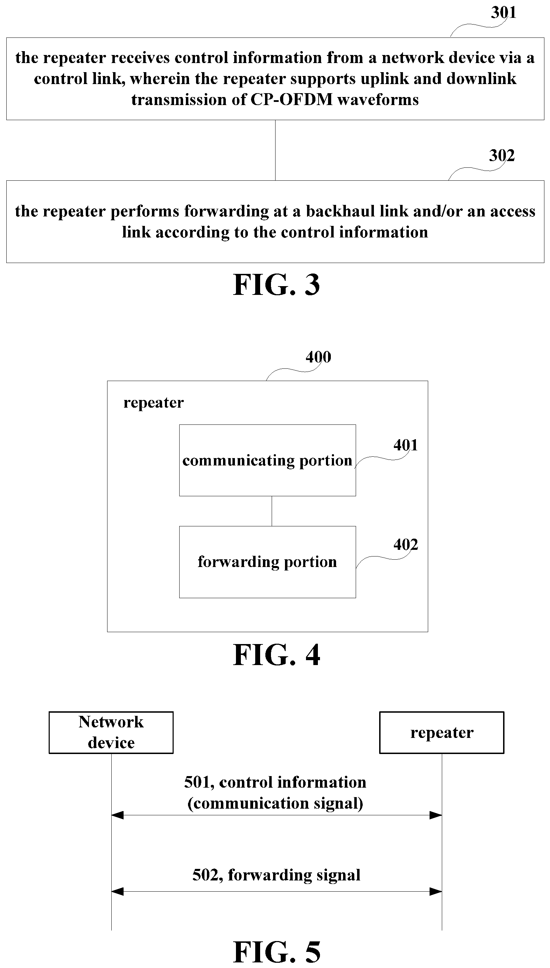

FIG. 3 is a schematic diagram of a transmission method of a repeater of the embodiments of the present application, as shown in FIG. 3, the method including:
301: the repeater receives control information from a network device via a control link, wherein the repeater supports uplink and downlink transmission of cyclic prefix orthogonal frequency division multiplexing (CP-OFDM) waveforms; and
302: the repeater performs forwarding at a backhaul link and/or an access link according to the control information.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

In the following description, "supporting" a certain feature means that the feature is mandatorily supported by NCR-MT.

For example, the extent to which the feature is supported may be determined according to the ability of the NCR. For example, the NCR may report the NCR's own capabilities to the network device, and the network device determines the extent to which the feature is mandatorily supported by NCR-MT according to the capabilities reported by the NCR.

For example, it is also possible that the NCR reporting capability is not required and the feature is fully supported mandatorily.

In the following description, "not mandatory supporting" a certain feature means that the feature is not mandatory for NCR supporting and may also be referred to as optional. For example, a certain feature may be selectively supported, or it may be selectively unsupported. For example, it is up to the device manufacturer to select whether the NCR has a certain feature.

In the embodiments of the present application, considering that the role of NCR-MT is to assist NCR-Fwd to forward the signal between the terminal equipment and the network device, possibly the position may be fixed and the function is as simplified as possible, so most of the functions for the enhanced NR feature and configuration are not required for NCR-MT.

In order to ensure communication between the NCR-MT and the network device, NCR-MT support is required for basic terminal capabilities. Hereinafter NR-related features and capabilities supported or not mandatorily supported by the NCR-MT are described, including e.g., NR-related features and capabilities including NCR-MT waveform and modulation, initial access and mobility management, MIMO, uplink and downlink control channels, and scheduling/HARQ operations.

The waveform and modulation characteristics of NCR are described first below.

In some embodiments, the repeater supports uplink and downlink transmission of CP-OFDM waveform.

In some embodiments, the repeater does not mandate to support uplink transmission of Discrete Fourier Transform-Spread OFDM (DFT-s-OFDM) waveforms.

In some embodiments, the repeater supports an uplink modulation scheme.

In some embodiments, the repeater supports a downlink modulation scheme.

It is worth noting that the above waveform and modulation characteristics of the NCR may be supported separately, or one or several of them may be supported, for example, the repeater may support any combination of the above waveform and modulation characteristics of the NCR.

Hereinafter the initial access and mobility management characteristics of NCR are described.

In some embodiments, the repeater supports an initial access capability. The repeater supports an initial access capability, includes: supporting a random access channel (RACH) preamble format, and/or, not mandating to support radio resource management (RRM) measurement based on a synchronization signal block (SSB), and/or, supporting reception of a broadcast system information block (SIB), and/or, not mandating to support paging.

For example, for RACH (Random Access Channel) preamble format: one preamble format is supported.

For another example, for broadcast SIB reception, MIB reception is supported, SIB1 (RMSI) reception is supported; OSI (other SIBs) is supported or is not mandatorily supported.

In some embodiments, the repeater supports a mobility management capability. The repeater supports a mobility management capability, including: supporting radio link management (RLM) based on an SSB, and/or, not mandating to support radio link management (RLM) based on a channel state information reference signal (CSI-RS).

It is worth noting that the above initial access and mobility management characteristics of the NCR may be supported separately, or one or several of them may be supported, for example, the repeater may support any combination of the above initial access and mobility management characteristics of the NCR.

The MIMO characteristics of NCR are described below.

In some embodiments, the repeater supports a multiple-input multiple-output (MIMO) feature. The repeater supports a multiple-input multiple-output feature, including at least one of the following: supporting physical downlink shared channel (PDSCH) reception, supporting PDSCH beam switching, supporting PDSCH MIMO layer number, supporting a transmission configuration indication (TCI) state for the PDSCH, not mandating to support an active TCI state for the PDCCH, supporting a downlink demodulation reference signal (DMRS), not mandating to support downlink semi-static physical resource block bundling, supporting physical uplink shared channel (PUSCH) transmission, supporting an uplink DMRS, supporting a beam management capability, supporting CSI-RS-related capability, supporting a downlink phase tracking reference signal (PTRS), supporting an uplink PTRS, supporting a time/frequency tracking reference signal (TRS)-related capability, supporting a sounding reference signal (SRS)-related capability, or supporting spatial domain relation-related capability.

In some embodiments, the repeater supports a basic PDSCH reception feature.

For example, for mapping between data and a resource element (RE): supported.

For another example, for single-layer transmitting: supported.

For example, for a transmission configuration indication (TCI) state: supported.

In some embodiments, the repeater supports beam switching of PDSCH.

For example, for duration: supported under FR2.

In some embodiments, the repeater supports the maximum number of MIMO layers of PDSCH.

For example, in a single-carrier standalone scene, at least four MIMO layers are supported in the frequency band that mandates four transmission channels; in FR2, at least two MIMO layers are supported.

In some embodiments, the repeater supports TCI state of PDSCH.

For example, the number of the activated TCI state supported: {1, 2, 4, 8}, or the number of the activated TCI state supported is 1 and/or 2 and/or 4 and/or 8 (that is, any combination of 1, 2, 4, and 8).

For another example, a maximum number of configurable TCI state: supporting {4, 8, 16, 32, 64, 128}, or the maximum number of configurable TCI state supported is 4 and/or 8 and/or 16 and/or 32 and/or 64 and/or 128 (that is, any combination of 4, 8, 16, 32, 64, and 128).

In some embodiments, the repeater does not mandate to support the additionally activated TCI state of the PDCCH.

For example, in addition to the number of the activated TCI state of PDSCH, an activated TCI state is additionally supported for the control channel, and the feature is supported only when the maximum number of the activated TCI for PDSCH is 1.

In some embodiments, the repeater supports a basic downlink DMRS.

For example, for Type A DMRS:
for at least one port, a prefix DMRS of one symbol, there is no additional DMRS symbol: supported;
for at least one port, the prefix DMRS of one symbol, there is an additional DMRS symbol: supported or not mandate to be supported;
for at least one port, the prefix DMRS of one symbol, there is two additional DMRS symbols: supported or not mandate to be supported.

For another example, for Type B DMRS:
for at least one port, a prefix DMRS of one symbol, there is no additional DMRS symbol: supported;
for at least one port, the prefix DMRS of one symbol, there is an additional DMRS symbol: supported or not mandate to be supported;

For another example, support 1 + 2 DMRS:
for more than one port, the prefix DMRS of one symbol, two additional DMRS symbols: not mandate to be supported.

For another example, support DMRS type:
for type 1: supported;
for type 2, not mandate to be supported.

In some embodiments, the repeater does not mandate to support downlink semi-static physical resource block bundling.

In some embodiments, the repeater supports a basic PUSCH transmitting feature.

For example, for data RE mapping: supported.

For another example, for single-layer transmitting (single Tx): supported.

For another example, for SRS transmission of a single resource on a single port (usage of SRS set is configured as "codebook"): supported.

In some embodiments, the repeater supports a basic uplink DMRS.

For example, for Type A DMRS:
for a prefix DMRS of one symbol, there is no additional DMRS symbol: supported;
for a prefix DMRS of one symbol, there is an additional DMRS symbol: supported or not mandate to be supported;
for a prefix DMRS of one symbol, there are two additional DMRS symbols: supported or not mandate to be supported.

For another example, for Type B DMRS:
for a prefix DMRS of one symbol, there is no additional DMRS symbol: supported;
for a prefix DMRS of one symbol, there is an additional DMRS symbol: supported or not mandate to be supported.

For another example, support 1 + 2 DMRS:
for more than one port, the prefix DMRS of one symbol, two additional DMRS symbols: not mandate to be supported.

For another example, support DMRS type:
for type 1: supported;
For type 2: supported.

For another example, for uplink prefix DMRS of two symbols: not mandate to be supported.

For another example, for uplink prefix DMRS of two symbols, and an additional DMRS of two symbols: not mandate to be supported.

In some embodiments, the repeater supports a Beam management related capability.

For example, for Beam correspondence: supported.

For another example, for periodic beam report and aperiodic beam report: supported.

For another example, for beam measurement based on SSB or CSI-RS: not mandate to be supported.

For another example, for Beam reporting time: supported.

For another example, for selecting reception beam by utilizing repetition "on" of the CSI-RS resource: supported or not mandate to be supported.

For another example, for Beam switching: not mandate to be supported.

For another example, for beam reporting of non-group: supported or not mandate to be supported.

For another example, for uplink beam management: supported or not mandate to be supported.

For another example, for Beam failure recovery: not mandate to be supported.

In some embodiments, the repeater supports a CSI-RS-related capability.

For example, for CSI feedback: supported.

For another example, for CSI feedback received by the CSI-RS and the CSI-IM: supported.

For another example, for RE mapping mode of PDSCH: supported.

For another example, for semi-persistent CSI-RS: supported.

for another example, for a CSI reporting structure: supported.

For another example, for Type I single panel codebook: not mandate to be supported.

In some embodiments, the repeater supports basic downlink PTRS and uplink PTRS.

For example, downlink PTRS of a port is supported, and/or uplink PTRS of a port is supported.

In some embodiments, the repeater supports a TRS-related capability.

For example, for basic TRS: supported.

For another example, for TRS (CSI-RS for tracking): supported or not mandate to be supported.

In some embodiments, the repeater supports an SRS-related capability.

For example, for basic SRS: supported.

For another example, for an SRS resource: supported or not mandate to be supported.

For another example, for SRS transmission switching: supported or not mandate to be supported.

In some embodiments, the repeater supports an uplink spatial domain relationship related-capability.

For example, for configured spatial domain relationship: supported or not mandate to be supported.

For example, for activated spatial domain relationship: supported or not mandate to be supported.

For another example, for additional activated spatial domain relationship for PUCCH: not mandate to be supported.

It is worth noting that the above MIMO characteristics of the NCR may be supported separately, or one or several of them may be supported, for example, the repeater may support any combination of the above MIMO characteristics of the NCR.

The uplink and downlink control channels and process-related characteristics of NCR are further described below.

In some embodiments, the repeater supports a downlink control channel and process characteristics.

For example, for basic downlink control channel characteristics: supported.

For another example, for each slot and each scheduling CC in TDD, handling one unicast DCI scheduling DL and two unicast DCI scheduling ULs: not mandate to be supported.

For another example, for type 1 CSS and type 3 CSS with dedicated RRC configurations, and for UE-specific 6RB bitmap and SS of 3 OFDM symbols, CORESET resource allocation in the case of FR2: supported or not mandate to be supported.

For another example, for more than one CORESET configuration per BWP except CORESET 0: supported or not mandate to be supported in the case of FR2.

For another example, for more than one TCI state configuration per CORESET: supported or not mandate to be supported.

In some embodiments, the repeater supports an uplink control channel and process characteristics.

For example, for basic uplink control channel characteristics: supported.

For another example, for PUCCH format 2 that is valid for frequency hopping with more than 1 to 2 OFDM symbols per slot: supported or not mandate to be supported.

For another example, for PUCCH format 3 that is valid for frequency hopping with more than 4 to 14 OFDM symbols per slot: supported or not mandate to be supported.

For another example, for non-frequency-hopping PUCCH formats 0 and 2 in frequency-hopping failure: not mandate to be supported.

For another example, for non-frequency-hopping PUCCH formats 1, 3 and 4 in frequency-hopping failure: not mandate to be supported.

For another example, for dynamic HARQ-ACK codebook: supported or not mandate to be supported.

For another example, for semi-static HARQ-ACK codebook: supported or not mandate to be supported.

For another example, for HARQ-ACK spatial domain bundling for PUCCH or PUSCH per PUCCH: not mandate to be supported.

For another example, when SR/HARQ-ACK/CSI should be transmitted with the same start symbol in a slot on a PUCCH resource, SR/HARQ-ACK/CSI multiplexes once using one PUCCH (or HARQ-ACK/CSI attached to a PUSCH) per slot: not mandate to be supported.

For another example, for UCI code group segmentation: not mandate to be supported.

For another example, for repetition of PUCCH formats 1, 3 and 4 with K = 2, 4, 8 in multiple slots: not mandate to be supported.

For another example, PUCCH-spatial relationinfo is indicated by MAC CE for each PUCCH resource: supported or not mandate to be supported.

For another example, for HARQ-ACK with different PUCCH/PUSCH start OFDM symbols that is multiplexed in PUSCH: supported or not mandate to be supported.

It is worth noting that the above uplink and downlink control channels and process-related characteristics of NCR may be supported separately, or one or several of them may be supported, for example, the repeater may support any combination of the above uplink and downlink control channels and process-related characteristics of NCR.

NCR scheduling or HARQ operations are further described below.

In some embodiments, the repeater supports a scheduling or hybrid automatic retransmission request (HARQ) operation.

For example, for basic scheduling or HARQ operation: supported.

For another example, for frequency hopping within slots of PUSCH scheduled by Type 1 CSS before RRC connection: not mandate to be supported.

For another example, for PDSCH mapping type A with less than 7 OFDM symbols: not mandate to be supported.

For another example, for PDSCH mapping type B: not mandate to be supported.

For another example, for frequency hopping within slots of PUCCH other than PUSCH scheduled by Type 1 CSS before RRC connection: not mandate to be supported.

For another example, for PUSCH repetition on multiple slots: not mandate to be supported.

For another example, for semi-static and dynamic rate-matching resource sets configured for DL: not mandate to be supported.

For another example, for rate matching around LTE CRS: not mandate to be supported.

For another example, for slot offset with DL scheduling of PDSCH type A being greater than 0: not mandate to be supported.

For another example, for slot offset with DL scheduling of PDSCH type B being greater than 0: not mandate to be supported.

For another example, for UL scheduling slot offset greater than 12: not mandate to be supported.

Channel coding characteristics of NCR are described below.

In some embodiments, the repeater supports channel coding.

The uplink transmit power control characteristics of the NCR is further described below.

In some embodiments, the repeater supports uplink transmit power control (TPC).

For example, for dynamic power balancing for LTE-NR DC: not mandate to be supported.

For example, for operation A of a single UL Tx case 1: not mandate to be supported.

For another example, for basic power control operations: supported.

For another example, for uplink power control for two PUSCH closed loops: not mandate to be supported.

For another example, for uplink power control for two PUCCH closed loops: not mandate to be supported.

It is worth noting that the above scheduling or HARQ operation related characteristics of NCR may be supported separately, or one or several of them may be supported, for example, the repeater may support any combination of the above scheduling or HARQ operation related characteristics of NCR.

Characteristics of NCR that are not mandatorily supported are further described below.

In some embodiments, the repeater does not mandate to support or does not support at least one of the following features or capabilities: two-step random access, unlicensing, eMIMO, carrier aggregation (CA), multi-radio dual connectivity (MR-DC), or an integrated access and backhaul (IAB)-related capability.

In some embodiments, the repeater does not mandate to support or does not support at least one of the following features or capabilities: a non-terrestrial network (NTN), NR from 52.6 GHz to 71 GHz-related feature, or a downlink 1024QAM-related feature for FR1.

In some embodiments, the repeater does not mandate to support or does not support at least one of the following features or capabilities: cross-link interference (CLI) remote interference management (RIM), or a multicast broadcast service (MBS)-related feature.

It is worth noting that the above not mandatory support features of NCR may be one or several of them, and for example, the repeater may not mandate to support any combination of the above features.

The capability characteristics of NCR-MT is schematically illustrated hereinbefore, and the present application is not limited to this. In addition, the above features may be arbitrarily combined to form a list of features supported or mandated by NCR-MT. Table 1 further schematically illustrates feature groups mandated for NCR-MT below. Unless otherwise stated, other feature groups or components of feature groups and specific capabilities are optional for NCR-MT.

**Table 1 layer-1 mandatory features for NCR-MT**

| Features | Index | Feature group | components | Additional information |
|---|---|---|---|---|
| 0 | 0-1 | CP-OFDM waveform for DL and UL | 1) CP-OFDM for DL | |
| Waveform, modulation, subcarrier spacings, and CP | | | 2) CP -OFDM for UL | |
| | 0-3 | DL modulation scheme | 1) QPSK modulation | |
| | | | 2) 16QAM modulation | |
| | | | 3) 64QAM modulation for FR1 | |
| | 0-4 | UL modulation scheme | 1) QPSK modulation | |
| | | | 2) 16QAM modulation | |
| 1 **Initial** access and mobility | 1-1 | Basic initial access channels and procedures | 1) RACH preamble format | Only 1 preamble for component 1), component 2), component 3) except paging |
| | | | 2) SS block based RRM measurement | |
| | | | 3) Broadcast SIB reception including RMSI/OSI and paging | |
| | 1-3 | SS block based RLM | SS block based RLM | |
| 2. MIMO | 2-1 | Basic PDSCH reception | 1) Data RE mapping | |
| | | | 2) Single layer transmission | |
| | | | 3) Support one TCI state | |
| | 2-2 | PDSCH beam switching | 1) Time duration (definition follows clause 5.1.5 in TS 38.214), Xi, to determine and apply spatial QCL information for corresponding PDSCH reception. | Applicable only to FR2 |
| | | | Time duration is defined counting from end of last symbol of PDCCH to beginning of the first symbol of PDSCH. | |
| | | | Xi is the number of OFDM symbols, i is the index of SCS, l=1,2, corresponding to 60,120 kHz SCS. | |
| | 2-3 | PDSCH MIMO layers | Supported maximal number of MIMO layers | For single CC standalone NR, it is mandatory with capability signalling to support at least 4 MIMO layers in the bands where 4Rx is specified as mandatory for the given UE and at least 2 MIMO layers in FR2. |
| | 2-4 | TCI states for PDSCH | 1) Support number of active TCI states per BWP per CC, including control and data | UE is mandated to signal 64 for FR2. For FR1, UE is mandated to report at least the max number of allowed SSB in the band. |
| | | | 2) Maximum number of configured TCI states per CC for PDSCH | |
| | 2-5 | Basic downlink DMRS for scheduling type A | 1) Support 1 symbol FL DMRS without additional symbol(s) | |
| | | | 2) Support 1 symbol FL DMRS and 1 additional DMRS symbol | |
| | | | 3) Support 1 symbol FL DMRS and 2 additional DMRS symbols for at least one port | |
| | 2-6 | Basic downlink DMRS for scheduling type B | 1) Support 1 symbol FL DMRS without additional symbol(s) | |
| | | | 2) Support 1 symbol FL DMRS and 1 additional DMRS symbol | |
| | 2-10 | Support DMRS type (downlink) | Support DMRS {type 1, both type 1 and type 2} | Type 1 is mandatory with capability signalling. Type 2 is optional with capability signalling |
| | 2-12 | Basic PUSCH transmission | Data RE mapping | |
| | | | Single layer (single Tx) transmission | |
| | | | Single port, single resource SRS transmission (SRS set use is configured as for codebook) | |
| | 2-16 | Basic uplink DMRS (uplink) for scheduling type A | 1) Support 1 symbol FL DMRS without additional symbol(s) | |
| | | | 2) Support 1 symbol FL DMRS and 1 additional DMRS symbols | |
| | | | 3) Support 1 symbol FL DMRS and 2 additional DMRS symbols | |
| | 2-16a | Basic uplink DMRS for scheduling type B | 1) Support 1 symbol FL DMRS without additional symbol(s) | |
| | | | 2) Support 1 symbol FL DMRS and 1 additional DMRS symbol | |
| | 2-17 | Support DMRS type (uplink) | Support DMRS {type 1, both type 1 and type 2} | |
| | 2-20 | Beam correspondence | Support Beam correspondence | |
| | 2-21 | Periodic beam | 1) Support report on PUCCH formats over 1 | |
| | | report | - 2 OFDM symbols once per slot | |
| | | | 2) Support report on PUCCH formats over 4 | |
| | | | - 14 OFDM symbols once per slot | |
| | 2-22 | Aperiodic beam report | Support aperiodic report on PUSCH | |
| | 2-25 | Beam reporting timing | The number of symbols, Xi, between the last symbol of SSB/CSI-RS and the first symbol of the transmission channel containing beam report is at least RBi, where i is the index of SCS, i=1,2,3,4 corresponding to 15,30,60,120 kHz SCS. | |
| | 2-29 | Non-group based beam reporting | Support of non-group based RSRP reporting with N_max RSRP values reported | |
| | 2-30 | Uplink beam management | 1) Support of SRS based beam management | |
| | | | 2) Supported max number of SRS resource per set (SRS set use is configured as for beam management). | |
| | | | 3) Supported max number of SRS resource sets (SRS set use is configured as for beam management). | |
| | 2-32 | Basic CSI feedback | 1) Type I single panel codebook based PMI (further discuss which mode or both to be supported as mandatory) | |
| | | | 2) 2Tx codebook for FR1 and FR2 | |
| | | | 3) 4Tx codebook for FR1 | |
| | | | 4) 8Tx codebook for FR1 when configured as wideband CSI report | |
| | | | 5) p-CSI on PUCCH formats over 1 - 2 OFDM symbols once per slot (or piggybacked on a PUSCH) | |
| | | | 6) p-CSI report on PUCCH formats over 4 - 14 OFDM symbols once per slot (or piggybacked on a PUSCH) | |
| | | | 7) a-CSI on PUSCH (at least Z value >= 14 symbols, detail processing time to be discussed separately) further check a-CSI on p-CSI-RS and/or SP-CSI-RS from component-7 | |
| | 2-33 | CSI-RS and CSI-IM reception for CSI feedback | 1) Supported max # of configured NZP-CSI-RS resources per CC, | |
| | | | 2) Supported max # of ports across all configured NZP-CSI-RS resources per CC | |
| | | | 3) Supported max # of configured CSI-IM resources per CC | |
| | | | 4) Supported max # simultaneous NZP-CSI-RS resources in active BWPs across all CCs | |
| | | | 5) Supported max # simultaneous NZP-CSI-RS resources per CC | |
| | | | 6) Supported max total # of CSI-RS ports in simultaneous NZP-CSI-RS resources in active BWPs across all CCs | |
| | | | 7) Supported max total # of CSI-RS ports in simultaneous NZP-CSI-RS resources per CC | |
| | 2-33a | Supported PDSCH RE-mapping patterns | 1) Supported max # of RE mapping patterns, each pattern can be described as a resource (including NZP/ZP CSI-RS and CRS, CORESET and SSB and bitmap configured in 5-26/27) | |
| | | | Note: patterns are counted as per symbol per CC | |
| | | | 2) Supported max # of RE mapping patterns, each pattern can be described as a resource (including NZP/ZP CSI-RS and CRS, CORESET and SSB and bitmap configured in 5-26/27/27a) | |
| | | | Note: patterns are counted as per slot per CC | |
| | 2-33b | SP CSI-RS | Support SP CSI-RS | |
| | 2-35 | CSI report framework | 1) Maximum number of periodic CSI report setting per BWP for CSI report | |
| | | | 2) Maximum number of periodic CSI report setting per BWP for beam report | |
| | | | 3) Maximum number of aperiodic CSI report setting per BWP for CSI report | |
| | | | 4) Maximum number of aperiodic CSI report setting per BWP for beam report | |
| | | | 5) Maximum number of configured aperiodic CSI triggering states in CSI-AperiodicTriggerStateList per CC, | |
| | | | 6) Maximum number of semi-persistent CSI report setting per BWP for CSI report | |
| | | | 7) Maximum number of semi-persistent CSI report setting per BWP for beam report | |
| | | | 8) UE can process Y CSI report(s) simultaneously in a CC. CSI reports can be P/SP/A CSI and any latency class and codebook type. | |
| | | | 9) UE can process X CSI report(s) simultaneously across all CCs. CSI reports can be P/SP/A CSI and any latency class and codebook type. | |
| | 2-44 | Basic DL PTRS | Support 1 port of DL PTRS | |
| | 2-47 | Basic UL PTRS | Support 1 port of DL PTRS | |
| | 2-50 | Basic TRS | 1) Support of TRS (mandatory) | |
| | | | 2) All the periodicity are supported. | |
| | 2-51 | TRS (CSI-RS for tracking) | 1) TRS burst length (X), | |
| | | | 2) Max # of TRS resource sets (per CC) UE is able to track simultaneously | |
| | | | 3) Max # of TRS resource sets configured to UE per CC | |
| | | | 4) Max # of TRS resource sets configured to UE across CCs | |
| | 2-52 | Basic SRS | 1) Support 1 port SRS transmission | |
| | | | 2) Support periodic/aperiodic SRS transmission | |
| | 2-53 | SRS resources | 1) Maximum number of aperiodic SRS resources (configured to UE) per BWP | |
| | | | 2) Maximum number of aperiodic SRS resources (configured to UE) per BWP per slot | |
| | | | 3) Maximum number of periodic SRS resources (configured to UE) per BWP | |
| | | | 4) Maximum number of periodic SRS resources (configured to UE) per BWP per slot | |
| | | | 5) Maximum number of semi-persistent SRS resources (configured to UE) per BWP | |
| | | | 6) Maximum number of semi-persistent SRS resources (configured to UE) per BWP per slot | |
| | | | 7) Maximum number of SRS port per resource | |
| | 2-59 | Configured spatial relations | Maximum number of configured spatial relations per CC for PUCCH and SRS | |
| | 2-60 | Active spatial relations | Maximum total number of {unique DL RS (except for aperiodic NZP CSI-RS) and SRS without spatial relation configured, and, TCI states available for DCI triggering of aperiodic NZP CSI-RS}, for indicating spatial domain transmit filter for PUCCH and SRS for PUSCH, per BWP per CC | |
| 3. | 3-1 | Basic DL control channel | 1) One configured CORESET per BWP per cell in addition to CORESETO | |
| DL control channel and procedure | | | - CORESET resource allocation of 6RB bit-map and duration of 1 - 3 OFDM symbols for FR1 | |
| | | | - For type 1 CSS without dedicated RRC configuration and for type 0, 0A, and 2 CSSs, CORESET resource allocation of 6RB bit-map and duration 1-3 OFDM symbols for FR2 | |
| | | | - For type 1 CSS with dedicated RRC configuration and for type 3 CSS, UE specific SS, CORESET resource allocation of 6RB bit-map and duration 1-2 OFDM symbols for FR2 | |
| | | | - REG-bundle sizes of 2/3 RBs or 6 RBs | |
| | | | - Interleaved and non-interleaved CCE-to-REG mapping | |
| | | | - Precoder-granularity of REG-bundle size | |
| | | | - PDCCH DMRS scrambling determination | |
| | | | - TCI state(s) for a CORESET configuration | |
| | | | 2) CSS and UE-SS configurations for unicast PDCCH transmission per BWP per cell | |
| | | | - PDCCH aggregation levels 1, 2, 4, 8, 16 | |
| | | | - UP to 3 search space sets in a slot for a scheduled SCell per BWP | |
| | | | This search space limit is before applying all dropping rules. | |
| | | | - For type 1 CSS with dedicated RRC configuration, type 3 CSS, and UE-SS, the monitoring occasion is within the first 3 OFDM symbols of a slot | |
| | | | - For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot | |
| | | | 3) Monitoring DCI formats 0_0, 1_0, 0_1, 1_1 | |
| | | | 4) Number of PDCCH blind decodes per slot with a given SCS follows Case 1-1 table | |
| | | | 5) Processing one unicast DCI scheduling DL and one unicast DCI scheduling UL per slot per scheduled CC for FDD | |
| | 3-1' | For type 1 CSS with dedicated RRC configuration and for type 3 CSS, UE specific SS, CORESET resource allocation of 6RB bit-map and duration 3 OFDM symbols for FR2 | For type 1 CSS with dedicated RRC configuration and for type 3 CSS, UE specific SS, CORESET resource allocation of 6RB bit-map and duration 3 OFDM symbols for FR2 | |
| | 3-3 | More than one CORESET configurations per BWP in addition to CORESETO | More than one CORESET configurations per BWP in addition to CORESETO | |
| | 3-4 | More than one TCI state configurations per CORESET | More than one TCI state configurations per CORESET | |
| 4. UL control channel and procedure | 4-1 | Basic UL control channel | 1) PUCCH format 0 over 1 OFDM symbols once per slot | |
| | | | 2) PUCCH format 0 over 2 OFDM symbols once per slot with frequency hopping as "enabled" | |
| | | | 3) PUCCH format 1 over 4 - 14 OFDM symbols once per slot with intra-slot frequency hopping as "enabled" | |
| | | | 5) One SR configuration per PUCCH group | |
| | | | 6) HARQ-ACK transmission once per slot with its resource/timing determined by using the DCI | |
| | | | 7) SR/HARQ multiplexing once per slot using a PUCCH when SR/HARQ-ACK are supposed to be sent by overlapping PUCCH resources with the same starting symbols in a slot | |
| | | | 8) HARQ-ACK piggyback on PUSCH with/without aperiodic CSI once per slot when the starting OFDM symbol of the PUSCH is the same as the starting OFDM symbols of the PUCCH resource that HARQ-ACK would have been transmitted on | |
| | | | 9) Semi-static beta-offset configuration for HARQ-ACK | |
| | | | 10) Single group of overlapping PUCCH/PUCCH and overlapping PUCCH/PUSCH s per slot per PUCCH cell group for control multiplexing | |
| | 4-10 | Dynamic HARQ-ACK codebook | Dynamic HARQ-ACK codebook | |
| | 4-24 | PUCCH-spatialrelationi nfo indication by a MAC CE per PUCCH resource | PUCCH-spatialrelationinfo indication by a MAC CE per PUCCH resource | |
| | 4-28 | HARQ-ACK multiplexing on PUSCH with different PUCCH/PUSC H starting OFDM symbols | HARQ-ACK piggyback on a PUSCH with/without aperiodic CSI once per slot when the starting OFDM symbol of the PUSCH is different from the starting OFDM symbols of the PUCCH resource that HARQ-ACK would have been transmitted on | |
| 5. Scheduling/ HARQ operation | 5-1 | Basic scheduling/HA RQ operation | 1) Frequency-domain resource allocation | |
| | | | - RA Type 0 only and Type 1 only for PDSCH without interleaving | |
| | | | - RA Type 1 for PUSCH without interleaving | |
| | | | 2) Time-domain resource allocation | |
| | | | - 1-14 OFDM symbols for PUSCH once per slot | |
| | | | - One unicast PDSCH per slot | |
| | | | - Starting symbol, and duration are determined by using the DCI | |
| | | | - PDSCH mapping type A with 7-14 OFDM symbols | |
| | | | - PUSCH mapping type A and type B | |
| | | | - For type 1 CSS without dedicated RRC configuration and for type 0, 0A, and 2 CSS, PDSCH mapping type A with {4-14} OFDM symbols and type B with {2, 4, 7} OFDM | |
| | | | symbols 3) TBS determination | |
| | | | 4) Nominal UE processing time for N1 and N2 (Capability #1) | |
| | | | 5) HARQ process operation with configurable number of DL HARQ processes of up to 16 | |
| | | | 6) Cell specific RRC configured UL/DL assignment for TDD | |
| | | | 7) Dynamic UL/DL determination based on L1 scheduling DCI with/without cell specific RRC configured UL/DL assignment | |
| | | | 9) In TDD support at most one switch point per slot for actual DL/UL transmission(s) | |
| | | | 10) DL scheduling slot offset K0=0 | |
| | | | 12) UL scheduling slot offset K2<=12 | |
| | | | For type 1 CSS without dedicated RRC configuration and for type 0, 0A, and 2 CSS, interleaving for VRB-to-PRB mapping for PDSCH | |
| 7. Channel | 7-1 | Channel coding | 1) LDPC encoding and associated functions for data on DL and UL | |
| coding | | | 2) Polar encoding and associated functions for PBCH, DCI, and UCI | |
| | | | 3) Coding for very small blocks | |
| 8. UL TPC | 8-3 | Basic power control operation | 1) Accumulated power control mode for closed loop | |
| | | | 2) 1 TPC command loop for PUSCH, PUCCH respectively | |
| | | | 3) One or multiple DL RS configured for pathloss estimation | |
| | | | 4) One or multiple p0-alpha values configured for open loop PC | |
| | | | 5) PUSCH power control | |
| | | | 6) PUCCH power control | |
| | | | 7) PRACH power control | |
| | | | 8) SRS power control | |
| | | | 9) PHR | |

It is worth noting that Table 1 schematically illustrates an example of the capability features that NCR-MT forces to support, but the present application is not limited to this, for example, part of the content in Table 1 may be deleted to form a new capability feature table, or more contents may be added to form another capability feature table, and various combinations may be made to NCR-MT capability features according to the above-mentioned contents in the present application.

The embodiments above only schematically illustrate the present application, but the present application is not limited to this, and appropriate variations may also be made on the basis of the above embodiments. For example, the above embodiments may be used separately, or one or more of the above embodiments may be combined.

According to the embodiments of the present application, the repeater receives control information from a network device via a control link, wherein the repeater supports uplink and downlink transmission of cyclic prefix orthogonal frequency division multiplexing (CP-OFDM) waveforms. Therefore, the repeater has the ability to communicate with the network device, the network device may configure the forwarding of the repeater according to the condition of the network, may better strengthen the signal coverage and cope with the changes of the environment and the main business in the cell, so as to improve the transmission efficiency of the whole network.

### Embodiments of Second Aspect

The embodiments of the present application provide a repeater that may, for example, be a network device or a terminal equipment, or some one or more components or assemblies configured on a network device or a terminal equipment.

FIG. 4 is a schematic diagram of a repeater in the embodiments of the present application. Since the principle for the repeater to solve the problem is the same as the method of the embodiments of the first aspect, the specific implementation may be realized referring to the embodiments of the first aspect, and the same contents will not be repeated.

As shown in FIG. 4, a repeater 400 of the embodiments of the present application includes:
a communicating portion 401 configured to receive control information from a network device via a control link, wherein the repeater supports uplink and downlink transmission of cyclic prefix orthogonal frequency division multiplexing (CP-OFDM) waveforms; and
a forwarding portion 402 configured to perform forwarding at a backhaul link and/or an access link according to the control information.

FIG. 4 schematically illustrates only the composition of the repeater 400, but the present application is not limited to this. For example, the communicating portion 401 may be referred to as NCR-MT, or it may be a module or component of NCR-MT; the forwarding portion 402 may be referred to as NCR-Fwd or a module or component of NCR-Fwd.

In some embodiments, the repeater does not mandate to support uplink transmission of the DFT-s-OFDM waveform.

In some embodiments, the repeater supports an uplink modulation scheme.

In some embodiments, the repeater supports a downlink modulation scheme.

In some embodiments, the repeater supports an initial access capability.

In some embodiments, the repeater supports an initial access capability, includes: supporting a random access channel (RACH) preamble format, and/or, not mandating to support radio resource management (RRM) measurement based on a synchronization signal block (SSB), and/or, supporting reception of a broadcast system information block (SIB), and/or, not mandating to support paging.

In some embodiments, the repeater supports a mobility management capability.

In some embodiments, the repeater supports a mobility management capability, including: supporting radio link management (RLM) based on an SSB, and/or, not mandating to support radio link management (RLM) based on a channel state information reference signal (CSI-RS).

In some embodiments, the repeater supports a multiple-input multiple-output (MIMO) feature.

In some embodiments, the repeater supports a multiple-input multiple-output feature, including at least one of the following: supporting physical downlink shared channel (PDSCH) reception, supporting PDSCH beam switching, supporting PDSCH MIMO layer number, supporting a transmission configuration indication (TCI) state for the PDSCH, not mandating to support an active TCI state for the PDCCH, supporting a downlink demodulation reference signal (DMRS), not mandating to support downlink semi-static physical resource block bundling, supporting physical uplink shared channel (PUSCH) transmission, supporting an uplink DMRS, supporting a beam management capability, supporting CSI-RS-related capability, supporting a downlink phase tracking reference signal (PTRS), supporting an uplink PTRS, supporting a time/frequency tracking reference signal (TRS)-related capability, supporting a sounding reference signal (SRS)-related capability, or supporting spatial domain relation-related capability.

In some embodiments, the repeater supports a downlink control channel and process characteristics.

In some embodiments, the repeater supports an uplink control channel and process characteristics.

In some embodiments, the repeater supports a scheduling or hybrid automatic retransmission request (HARQ) operation.

In some embodiments, the repeater supports channel coding.

In some embodiments, the repeater supports uplink transmit power control (TPC).

In some embodiments, the repeater does not mandate to support or does not support at least one of the following features or capabilities: two-step random access, unlicensing, eMIMO, carrier aggregation (CA), multi-radio dual connectivity (MR-DC), or an integrated access and backhaul (IAB)-related capability.

In some embodiments, the repeater does not mandate to support or does not support at least one of the following features or capabilities: a non-terrestrial network (NTN), NR from 52.6 GHz to 71 GHz-related feature, or a downlink 1024QAM-related feature for FR1.

In some embodiments, the repeater does not mandate to support or does not support at least one of the following features or capabilities: cross-link interference (CLI) remote interference management (RIM), or a multicast broadcast service (MBS)-related feature.

In addition, for the sake of simplicity, FIG. 4 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

The embodiments above only schematically illustrate the present application, but the present application is not limited to this, and appropriate variations may also be made on the basis of the above embodiments. For example, the above embodiments may be used separately, or one or more of the above embodiments may be combined.

According to the embodiments of the present application, the repeater receives control information from a network device via a control link, wherein the repeater supports uplink and downlink transmission of cyclic prefix orthogonal frequency division multiplexing (CP-OFDM) waveforms. Therefore, the repeater has the ability to communicate with the network device, the network device may configure the forwarding of the repeater according to the condition of the network, may better strengthen the signal coverage and cope with the changes of the environment and the main business in the cell, so as to improve the transmission efficiency of the whole network.

### Embodiments of Third Aspect

The embodiments of the present application provide a control method of a repeater, and is explained from a side of a network device, and the same content as the embodiments of the first aspect will not be repeated.

FIG. 5 is a schematic diagram of a control method of a repeater of the embodiments of the present application, as shown in FIG. 5, the method including:
501: a network device transmits control information to a repeater via a control link, wherein the repeater supports uplink and downlink transmission of cyclic prefix orthogonal frequency division multiplexing (CP-OFDM) waveforms; and
502: the network device receives or transmits a forwarded signal on a backhaul link.

It is worth noting that FIG. 5 above only schematically illustrates the embodiments of the present application, but the present application is not limited to this. For example, the order of execution between operations may be adjusted appropriately, and some other operations may be added or reduced. Those skilled in the art may make appropriate variations in accordance with the above contents, and which is not limited to the disclosure of FIG. 5 above.

In some embodiments, the network device may transmit a forwarding signal to the repeater (e.g. the destination is a terminal equipment, forwarded by the repeater) and/or a communication signal (e.g., the destination is the repeater), or the network device may also receive a forwarding signal from the repeater (e.g., generated and transmitted by the terminal equipment, and forwarded by the repeater) and/or a communication signal (e.g., generated and transmitted by the repeater).

Only the steps or processes related to the present application are illustrated hereinabove, but the present application is not limited to this. The method of the embodiments of the present application may also include other steps or processes, and the details of these steps or processes may be seen by referring to the related art.

The embodiments above only schematically illustrate the present application, but the present application is not limited to this, and appropriate variations may also be made on the basis of the above embodiments. For example, the above embodiments may be used separately, or one or more of the above embodiments may be combined.

According to the embodiments of the present application, the network device transmits control information to a repeater via a control link, wherein the repeater supports uplink and downlink transmission of cyclic prefix orthogonal frequency division multiplexing (CP-OFDM) waveforms. Therefore, the repeater has the ability to communicate with the network device, the network device may configure the forwarding of the repeater according to the condition of the network, may better strengthen the signal coverage and cope with the changes of the environment and the main business in the cell, so as to improve the transmission efficiency of the whole network.

### Embodiments of Fourth Aspect

The embodiments of the present application provide a network device.

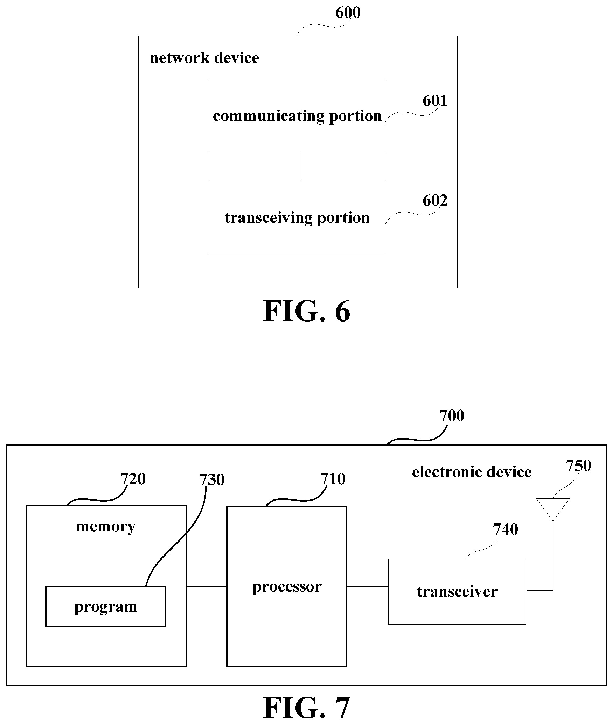

FIG. 6 is a schematic diagram of the network device in the embodiments of the present application. Since the principle for the network device to solve the problem is the same as the method of the embodiments of the third aspect, the specific implementation may be realized referring to the embodiments of the third aspect, and the same contents will not be repeated.

As shown in FIG. 6, a network device 600 of the embodiments of the present application includes:
a communicating portion 601 configured to transmit control information to a repeater via a control link, wherein the repeater supports uplink and downlink transmission of cyclic prefix orthogonal frequency division multiplexing (CP-OFDM) waveforms; and
a transceiving portion 602 configured to receive or transmit a forwarded signal on a backhaul link.

In some embodiments, the network device may transmit a forwarding signal to the repeater (e.g. the destination is a terminal equipment, forwarded by the repeater) and/or a communication signal (e.g., the destination is the repeater), or the network device may also receive a forwarding signal from the repeater (e.g., generated and transmitted by the terminal equipment, and forwarded by the repeater) and/or a communication signal (e.g., generated and transmitted by the repeater).

It is worth noting that only the components or modules related to the present application are illustrated hereinabove, but the present application is not limited to this. The network device 600 of the embodiments of the present application may also include other components or modules, and the details of these components or modules may be seen by referring to the related art.

In addition, for the sake of simplicity, FIG. 6 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

The embodiments above only schematically illustrate the present application, but the present application is not limited to this, and appropriate variations may also be made on the basis of the above embodiments. For example, the above embodiments may be used separately, or one or more of the above embodiments may be combined.

According to the embodiments of the present application, the network device transmits control information to a repeater via a control link, wherein the repeater supports uplink and downlink transmission of cyclic prefix orthogonal frequency division multiplexing (CP-OFDM) waveforms. Therefore, the repeater has the ability to communicate with the network device, the network device may configure the forwarding of the repeater according to the condition of the network, may better strengthen the signal coverage and cope with the changes of the environment and the main business in the cell, so as to improve the transmission efficiency of the whole network.

### Embodiments of Fifth Aspect

The embodiments of the present application provide a communication system. FIG. 1 is a schematic diagram of the communication system of the embodiments of the present application. As shown in FIG. 1, a communication system 100 includes a network device 101, a repeater 102 and a terminal equipment 103. For the sake of simplicity, FIG. 1 gives exemplary illustration by taking only one network device, one repeater and one terminal device as an example, but the embodiments of the present application are not limited to this.

In the embodiments of the present application, existing services or services that may be implemented in the future may be transmitted between the network device 101 and the terminal equipment 103. For example, these services may include, but are not limited to, enhanced mobile broadband (eMBB), large-scale machine-type communications (mMTC), highly reliable low-latency communications (URLLC), and vehicle-to-vehicle (V2X) communications, and etc. The repeater 102 is configured to perform the transmission method described in the embodiments of the first aspect, the network device 101 is configured to perform the transmission method described in the embodiments of the third aspect, and the contents thereof are incorporated here and will not be described here.

The embodiments of the present application further provide an electronic device. The electronic device is, for example, a repeater or a network device.

FIG. 7 is a schematic diagram of composition of the electronic device in the embodiments of the present application. As shown in FIG. 7, an electronic device 700 may include a processor 710 (such as a central processing unit (CPU)) and a memory 720; the memory 720 is coupled to the processor 710. The memory 720 may store various data and also may store the information processing program 730, and the program 730 is executed under the control of the processor 710.

For example, the processor 710 may be configured to execute the program to implement the transmission method as described in the embodiments of the first aspect. For example, the processor 710 may be configured to perform the following controls of: receiving control information from a network device via a control link, wherein the repeater supports uplink and downlink transmission of cyclic prefix orthogonal frequency division multiplexing (CP-OFDM) waveforms; and performing forwarding at a backhaul link and/or an access link according to the control information.

For another example, the processor 710 may be configured to execute the program to implement the control method as described in the embodiments of the third aspect. For example, the processor 710 may be configured to perform the following controls of: transmitting control information to a repeater via a control link, wherein the repeater supports uplink and downlink transmission of cyclic prefix orthogonal frequency division multiplexing (CP-OFDM) waveforms; and receiving or transmitting a forwarded signal on a backhaul link.

In addition, as shown in FIG. 7, the electronic device 700 may further include: a transceiver 740 and an antenna 750, etc., wherein the functions of the above components are similar to the related art, and will not be repeated here. It is worth noting that the electronic device 700 is not necessarily required to include all of the components shown in FIG. 7; in addition, the electronic device 700 may further include components not shown in FIG. 7, with reference to the related art.

The embodiments of the present application further provide a computer readable program which, when being executed in the repeater, causes a computer to execute the transmission method described in the embodiments of the first aspect in the repeater.

The embodiments of the present application further provide a storage medium storing a computer readable program which causes the computer to execute the transmission method described in the embodiments of the first aspect in the repeater.

The embodiments of the present application further provide a computer readable program which, when being executed in the network device, causes the computer to execute the control method described in the embodiments of the third aspect in the network device.

The embodiments of the present application further provide a storage medium storing a computer readable program which causes the computer to execute the control method described in the embodiments of the third aspect in the network device.

The above devices and methods of the present application may be implemented by hardware or by hardware combined with software. The present application relates to a computer readable program which, when being executed by a logic unit, enables the logic unit to implement the devices or components mentioned above, or enables the logic unit to implement the methods or steps described above. The logic unit is, for example, a field programmable logic unit, a microprocessor, a processor used in the computer, etc. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules may correspond to the steps shown in the drawings respectively. These hardware modules may be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium may be coupled to a processor so that the processor may read information from the storage medium and write information to the storage medium; or the storage medium may be a constituent part of the processor. The processor and the storage medium may be located in the ASIC. The software module may be stored in the memory of the mobile terminal or in a memory card that may be inserted into the mobile terminal. For example, if a device (such as a mobile terminal) uses a large-capacity MEGA-SIM card or a large-capacity flash memory device, the software module may be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art may make various variations and modifications to the present application according to spirit and principle of the application, and these variations and modifications should also be within the scope of the present application.

With respect to the above-mentioned embodiments disclosed in the embodiment, the following supplements are further disclosed:
1. A transmission method of a repeater, including:
   the repeater receives control information from a network device via a control link, wherein the repeater supports uplink and downlink transmission of cyclic prefix orthogonal frequency division multiplexing (CP-OFDM) waveforms; and
   the repeater performs forwarding at a backhaul link and/or an access link according to the control information.
2. The method according to the supplement 1, wherein the repeater does not mandate to support uplink transmission of discrete Fourier transform spread orthogonal frequency division multiplexing (DFT-s-OFDM) waveforms.
3. The method according to the supplement 1 or 2, wherein the repeater supports an uplink modulation scheme and/or a downlink modulation scheme.
4. The method according to any of the supplements 1 or 3, wherein the repeater supports an initial access capability and/or a mobility management capability.
5. The method according to the supplement 4, wherein the repeater supports an initial access capability, includes: supporting a random access channel (RACH) preamble format, and/or, not mandating to support radio resource management (RRM) measurement based on a synchronization signal block (SSB), and/or, supporting reception of a broadcast system information block (SIB), and/or, not mandating to support paging.
6. The method according to the supplement 4, wherein the repeater supports a mobility management capability, including: supporting radio link management (RLM) based on an SSB, and/or, not mandating to support radio link management (RLM) based on a channel state information reference signal (CSI-RS).
7. The method according to any of the supplements 1 or 6, wherein the repeater supports a multiple-input multiple-output (MIMO) feature.
8. The method according to the supplement 7, wherein the repeater supports a multiple-input multiple-output feature, including at least one of the following: supporting physical downlink shared channel (PDSCH) reception, supporting PDSCH beam switching, supporting PDSCH MIMO layer number, supporting a transmission configuration indication (TCI) state for the PDSCH, not mandating to support an active TCI state for the PDCCH, supporting a downlink demodulation reference signal (DMRS), not mandating to support downlink semi-static physical resource block bundling, supporting physical uplink shared channel (PUSCH) transmission, supporting an uplink DMRS, supporting a beam management capability, supporting CSI-RS-related capability, supporting a downlink phase tracking reference signal (PTRS), supporting an uplink PTRS, supporting a time/frequency tracking reference signal (TRS)-related capability, supporting a sounding reference signal (SRS)-related capability, or supporting spatial domain relation-related capability.
9. The method according to any of the supplements 1 to 8, wherein the repeater supports a downlink control channel and process characteristics, and/or, the repeater supports an uplink control channel and process characteristics.
10. The method according to any of the supplements 1 to 9, wherein the repeater supports a scheduling or hybrid automatic retransmission request (HARQ) operation, and/or, the repeater supports channel coding, and/or, the repeater supports uplink transmit power control (TPC).
11. The method according to any of the supplements 1 to 10, wherein the repeater does not mandate to support or does not support at least one of the following features or capabilities: two-step random access, unlicensing, eMIMO, carrier aggregation (CA), multi-radio dual connectivity (MR-DC), or an integrated access and backhaul (IAB)-related capability.
12. The method according to any of the supplements 1 to 11, wherein the repeater does not mandate to support or does not support at least one of the following features or capabilities: a non-terrestrial network (NTN), NR from 52.6 GHz to 71 GHz-related feature, or a downlink 1024QAM-related feature for FR1.
13. The method according to any of the supplements 1 to 12, wherein the repeater does not mandate to support or does not support at least one of the following features or capabilities: cross-link interference (CLI) remote interference management (RIM), or a multicast broadcast service (MBS)-related feature.
14. A control method of a repeater, including:
   a network device transmits control information to a repeater via a control link, wherein the repeater supports uplink and downlink transmission of cyclic prefix orthogonal frequency division multiplexing (CP-OFDM) waveforms; and
   the network device receives or transmits a forwarded signal on a backhaul link.
15. A repeater including a memory storing a computer program and a processor configured to execute the computer program to implement the communication method of a repeater according to any of the supplements 1 to 13.
16. A network device including a memory storing a computer program and a processor configured to execute the computer program to implement the control method of a repeater according to the supplement 14.

## Claims

1. A repeater, comprising:
a communicating portion configured to receive control information from a network device via a control link, wherein the repeater supports uplink and downlink transmission of cyclic prefix orthogonal frequency division multiplexing waveforms; and
a forwarding portion configured to perform forwarding at a backhaul link and/or an access link according to the control information.

2. The repeater according to claim 1, wherein the repeater does not mandate to support uplink transmission of discrete Fourier transform spread orthogonal frequency division multiplexing waveforms.

3. The repeater according to claim 1, wherein the repeater supports an uplink modulation scheme.

4. The repeater according to claim 1, wherein the repeater supports a downlink modulation scheme.

5. The repeater according to claim 1, wherein the repeater supports an initial access capability.

6. The repeater according to claim 5, wherein that the repeater supports an initial access capability comprises: supporting a random access channel preamble format, and/or, not mandating to support radio resource management measurement based on a synchronization signal block, and/or, supporting reception of a broadcast system information block, and/or, not mandating to support paging.

7. The repeater according to claim 1, wherein the repeater supports a mobility management capability.

8. The repeater according to claim 7, wherein that the repeater supports a mobility management capability comprises: supporting radio link management based on a synchronization signal block, and/or, not mandating to support radio link management based on a channel state information reference signal.

9. The repeater according to claim 1, wherein the repeater supports a multiple-input multiple-output feature.

10. The repeater according to claim 9, wherein that the repeater supports a multiple-input multiple-output feature comprises at least one of the following: supporting physical downlink shared channel reception, supporting physical downlink shared channel beam switching, supporting physical downlink shared channel MIMO layer number, supporting a transmission configuration indication state for a physical downlink shared channel, not mandating to support an active transmission configuration indication state for a physical downlink control channel, supporting a downlink demodulation reference signal, not mandating to support downlink semi-static physical resource block bundling, supporting physical uplink shared channel transmission, supporting an uplink demodulation reference signal, supporting a beam management capability, supporting channel state information reference signal-related capability, supporting a downlink phase tracking reference signal, supporting an uplink phase tracking reference signal, supporting a time/frequency tracking reference signal-related capability, supporting a sounding reference signal-related capability, or supporting spatial domain relation-related capability.

11. The repeater according to claim 1, wherein the repeater supports a downlink control channel and a process feature.

12. The repeater according to claim 1, wherein the repeater supports an uplink control channel and a process feature.

13. The repeater according to claim 1, wherein the repeater supports scheduling or hybrid automatic repeat request operation.

14. The repeater according to claim 1, wherein the repeater supports channel coding.

15. The repeater according to claim 1, wherein the repeater supports uplink transmit power control.

16. The repeater according to claim 1, wherein the repeater does not mandate to support or does not support at least one of the following features or capabilities: two-step random access, unlicensing, eMIMO, carrier aggregation, multi-radio dual connectivity, or an integrated access and backhaul-related capability.

17. The repeater according to claim 1, wherein the repeater does not mandate to support or does not support at least one of the following features or capabilities: a non-terrestrial network, NR from 52.6 GHz to 71 GHz-related feature, or a downlink 1024QAM-related feature for FR1.

18. The repeater according to claim 1, wherein the repeater does not mandate to support or does not support at least one of the following features or capabilities: cross-link interference remote interference management, or a multicast broadcast service-related feature.

19. A network device comprising:
a communicating portion configured to transmit control information to a repeater via a control link, wherein the repeater supports uplink and downlink transmission of cyclic prefix orthogonal frequency division multiplexing waveforms; and
a transceiving portion configured to receive or transmit a forwarded signal on a backhaul link.

20. A communication system, comprising:
a network device configured to transmit control information to a repeater via a control link; and
a repeater configured to receive the control information from the network device, wherein the repeater supports uplink and downlink transmission of cyclic prefix orthogonal frequency division multiplexing waveforms; and perform forwarding at a backhaul link and/or an access link according to the control information.
